# EUROPÄISCHE PATENTSCHRIFT

(11) **EP 2 278 248 B1**
(45) Veröffentlichungstag und Bekanntmachung des Hinweises auf die Patenterteilung: **30.04.2014**
(21) Anmeldenummer: 10005936.9
(22) Anmeldetag: 09.06.2010
(51) Int. Cl.: F28D 7/10, F28D 7/16, F28D 7/12, C10G 9/00, F16L 13/02, F16L 39/00

(54) **Wärmetauscher zum Kühlen von Spaltgas**
Heat exchanger for cooling fission gas
Echangeur thermique destiné au refroidissement de gaz de craquage

(30) Priorität: 17.06.2009 DE 102009025624
(43) Veröffentlichungstag der Anmeldung: 26.01.2011
(73) Patentinhaber: Borsig GmbH, 13507 Berlin (DE)
(72) Erfinder: Birk, Carsten, 16548 Glienicke (DE); Vogt, Michael, 10713 Berlin (DE); Eisenhawer, David Todd, Alberta T4R 2Y4 (CA)
(74) Vertreter: Radünz, Ingo

(56) Entgegenhaltungen:
- EP-A1- 0 066 384
- DE-A1- 19 707 915
- DE-C2- 19 531 330
- US-A- 3 012 802
- US-A- 3 285 632
- US-A1- 2007 193 729

## Beschreibung

Die Erfindung betrifft einen Wärmetauscher zum Kühlen von Spaltgas mit einer Rohrverbindung zwischen einem gekühlten Rohr und einem ungekühlten Rohr mit den Merkmalen des Oberbegriffes des Anspruches 1.

Ein derartiger Wärmetauscher zum Kühlen von Spaltgas mit einer Rohrverbindung ist aus der US 2007/0193729, sowie aus der DE 195 31 330 C2 bekannt. Spaltgas wird durch eine thermische Spaltung von Kohlenwasserstoffen in einem Spaltofen erzeugt. Solche Spaltöfen sind mit einer Anzahl von außen beheizten Spaltrohren versehen, durch welche die eingesetzten Kohlenwasserstoffe unter Zusatz von Wasserdampf geführt werden. Das erzeugte Spaltgas verlässt die Spaltrohre mit einer Temperatur von bis zu 900°C und muss zur Stabilisierung seiner molekularen Zusammensetzung sehr schnell abgekühlt werden. Die schnelle Abkühlung des Spaltgases erfolgt in Spaltgaskühlern durch eine Wärmeübertragung von dem Spaltgas an verdampfendes, unter einem hohen Druck stehendes Wasser.

Bei der aus der DE 195 31 330 C2 bekannten Rohrverbindung ist das Ende des ungekühlten Rohres mit einem Eintrittskopf versehen, der gabelförmig aufgeweitet ist und einen inneren und einen äußeren Rohrabschnitt aufweist. Der Zwischenraum zwischen den beiden Rohrabschnitten ist mit einem wärmeisolierenden Material gefüllt. Der äußere Rohrabschnitt ist mit dem Mantelrohr des gekühlten Doppelrohres verschweißt. Der innere Rohrabschnitt steht dem Innenrohr des gekühlten Doppelrohres in einem axialen Abstand gegenüber, wobei zwischen den Stirnseiten des inneren Rohrabschnittes und des Innenrohres eine als Ring (C, O, U oder V Form) ausgebildete Dichtung liegt, die ein Eindringen von Spaltgas in das wärmeisolierende Material verhindern soll.

Ein gabelförmiger, mit wärmeisolierendem Material gefüllter Eintrittskopf zur Verbindung eines ungekühlten Rohres mit einem gekühlten Rohr wird auch bei dem aus der EP 810 414 B1 bekannten Wärmetauscher zur Kühlung von Spaltgas eingesetzt. Bei dem bekannten Wärmetauscher besteht das gekühlte Rohr aus einem Innenrohr, das in einem radialen Abstand von einem Mantelrohr umschlossen ist. Eine Wasserkammer zur Zuführung eines Kühlmittels umgibt das Eintrittsende des gekühlten Rohres. Die Wasserkammer besteht aus einem massiven, viereckigen Stück, in das eine im Querschnitt kreisförmige Vertiefung eingebracht ist. Die Vertiefung nimmt ein einziges gekühltes Rohr auf, wobei das Innenrohr des gekühlten Rohres in den Boden der Vertiefung eingeschweißt und das Mantelrohr mit der Wasserkammer verschweißt ist. Der äußere Rohrabschnitt des Eintrittskopfes ist auf der dem Mantelrohr abgewandten Seite an die Wasserkammer angeschweißt, während der innere Rohrabschnitt des Eintrittskopfes dem Innenrohr des gekühlten Rohres in einem axialen Abstand gegenüber steht.

Die bekannten Eintrittsköpfe lassen aufgrund des axialen Spiels zwischen dem Innenrohr und dem inneren Rohrabschnitt eine thermisch bedingte Längendehnung uneingeschränkt zu. Die eingebrachte Wärmeisolierung bewirkt, dass der äußere Rohrabschnitt des Eintrittskopfes, der fest mit dem gekühlten Rohr verbunden ist, eine Wandtemperatur annimmt, die unterhalb der Temperatur des durch das ungekühlte Rohr strömenden Gases liegt. Die Wandtemperaturen, die die Rohre an der Verbindungsstelle erreichen, gleichen sich auf diese Weise aneinander an, so dass die Wärmespannungen an der Verbindungsstelle minimiert werden. Der Dichtring (C,O, U oder V Form) zwischen dem inneren Rohrabschnitt und dem Innenrohr verhindert ein Eindringen von Spaltgas in das wärmeisolierende Material des Eintrittskopfes. Oberhalb von 550 °C kann Kohlenstoff aus dem Spaltgas ausfallen und sich auf dem Dichtring niederschlagen. Als Folge davon kann der Dichtring undicht werden, so dass Spaltgas in das wärmeisolierende Material eindringen kann. In der weiteren Folge kann sich aus dem Leckagestrom des Spaltgases ausfallender Kohlenstoff auf dem wärmeisolierenden Material ablagern, was zu Beulspannungen im inneren Rohrabschnitt und zu Ringspannungen im äußeren Rohrabschnitt des Eintrittkopfes führt.

Der Erfindung liegt die Aufgabe zugrunde, den gattungsgemäßen Wärmetauscher mit einer Rohrverbindung zwischen einem ungekühlten und einem gekühlten Rohr so zu gestalten, dass die Abdichtung gegenüber dem Spaltgas bei ausfallendem Kohlenstoff verbessert wird.

Die Aufgabe wird bei einem gattungsgemäßen Wärmetauscher mit einer Rohrverbindung zwischen einem ungekühlten und einem gekühlten Rohr erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Wärmetauscher mit einer Rohrverbindung zwischen einem ungekühlten und einem gekühlten Rohr übernimmt der als U-Ring ausgebildete Dichtring bis zum Erreichen einer Temperatur von 500 bis 600 °C die Aufgabe einer ersten Abdichtung. Wenn oberhalb von 550 °C das Ausscheiden von Kohlenstoff aus dem Spaltgas beginnt, ist die thermisch bedingte Längendehnung des inneren Rohrabschnittes soweit fortgeschritten, dass die Lücke zwischen dem vorstehenden, radial innen vor dem Dichtring liegenden Randbereich des inneren Rohrabschnittes und dem Innenrohr überbrückt ist, so dass ein Metall-zu-Metall-Kontakt entsteht. Ein solcher Kontakt verhindert ein Eindringen von Spaltgas in Richtung auf den Dichtring und den Zwischenraum zwischen dem inneren und dem äußeren Rohrabschnitt des Eintrittskopfes und wirkt als zweite Abdichtung. In weiterer Ausgestaltung der Erfindung bewirkt die flexible Membran, die den mit dem wärmeisolierenden Material gefüllten Zwischenraum verschließt, dass eventuell noch eingedrungenes Spaltgas vollständig von dem wärmeisolierenden Material ferngehalten wird. Damit dient die flexible Membran als dritte Abdichtung.

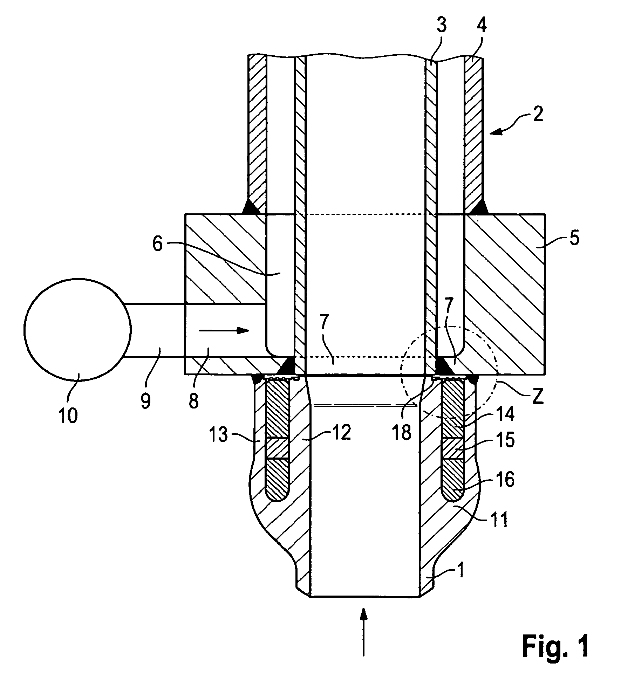

Mehrere Ausführungsbeispiele der Erfindung sind in der Zeichnung dargestellt und werden im Folgenden näher erläutert. Es zeigen
Fig. 1 einen Längsschnitt durch den unteren Teil eines Wärmetauschers mit einer Rohrverbindung gemäß der Erfindung;
Fig. 2 die Einzelheit Z nach Fig. 1 oder 3 und
Fig. 3 einen Längsschnitt durch den unteren Teil eines Wärmetauschers mit einer anderen Rohrverbindung gemäß der Erfindung.

In einem Spaltofen wird durch Umsetzung von Kohlenwasserstoffen mit Wasserdampf ein Spaltgas erzeugt. Der Spaltofen ist mit Spaltrohren 1 versehen, die von außen beheizt und von dem Einsatzstoff durchströmt sind. Das die Spaltrohre 1 mit einer Temperatur von bis zu 900 °C verlassende Spaltgas tritt direkt in einen Spaltgaskühler ein, der in unmittelbarer Nähe oberhalb des Spaltofens angeordnet ist. In dem Spaltgaskühler wird die molekulare Zusammensetzung des Spaltgases durch eine schroffe Abkühlung im Wärmetausch mit verdampfendem, unter hohem Druck stehenden Wasser stabilisiert.

Der Spaltgaskühler enthält mehrere Kühlrohre 2, die so in einer Reihe nebeneinander angeordnet sind, dass jedes Kühlrohr 2 einem der ungekühlten Spaltrohre 1 zugeordnet und in dessen axialer Verlängerung angeordnet ist. Jedes Kühlrohr 2 besteht aus einem gekühlten Innenrohr 3, das unter Bildung eines von dem Kühlmittel durchflossenen Ringraumes von einem Mantelrohr 4 umgeben ist. Die Innendurchmesser von Spaltrohr 1 und Innenrohr 3 sind, wie dargestellt, üblicherweise ähnlich groß.

Die Zufuhr und Abfuhr des Kühlmittels erfolgt jeweils über eine Wasserkammer 5, die das gezeigte untere und das nicht gezeigte obere Ende des Kühlrohres 2 umgibt. Die Wasserkammer 5 ist aus einem massiven, viereckigen Stück gefertigt, in das eine im Querschnitt kreisförmige Vertiefung 6 eingearbeitet ist, wobei jeder Vertiefung 6 ein Kühlrohr 2 zugeordnet ist. Das Mantelrohr 4 ist auf der dem Spaltrohr 1 abgewandten Seite an die Wasserkammer 5 angeschweißt. Dabei stimmt an der Einschweißstelle der Innendurchmesser des Mantelrohr 4 mit dem Durchmesser der Vertiefung 6 überein.

Die Vertiefung 6 ist so tief in das die Wasserkammer 5 bildende Stück eingearbeitet, dass ein ringförmiger Boden 7 mit einer geringen Restwanddicke verbleibt. In diesen Boden 7 ist das Innenrohr 3 eingeschweißt. Die Fläche des ringförmigen Bodens 7 ist begrenzt durch den Außendurchmesser des Innenrohres 3 und den Durchmesser der Vertiefung 6.

In jede Vertiefung 6 mündet in der Höhe des Bodens 7 vorzugsweise tangential eine Bohrung 8 hinein. Die Bohrungen 8 sind jeweils über einen Verbindungsstutzen 9 mit einer Zuführungsleitung 10 für das Kühlmedium verbunden. Das Kühlmedium tritt durch die Bohrung 8 mit hoher Geschwindigkeit in die Vertiefung 6 ein und erzeugt eine rotierende Strömung um das Innenrohr 3. Diese Strömung sorgt für eine gute Kühlung des Bodens 7 der Vertiefung 6 und verhindert auch eine Ablagerung von Partikeln auf dem Boden 7, die zu einer schädlichen, örtlichen Überhitzung führen würde.

Das austrittsseitige Ende des Spaltrohres 1 ist gabelförmig aufgeweitet und bildet einen Eintrittskopf 11. Der Eintrittskopf 11 besteht aus einem inneren, die Verlängerung des Spaltrohres 1 bildenden Rohrabschnitt 12 und einem äußeren Rohrabschnitt 13, die beide an einem Ende miteinander verbunden sind. Der äußere Rohrabschnitt 13 ist an die Unterseite der Wasserkammer 5 angeschweißt. Der innere Rohrabschnitt 12 des Eintrittskopfes 11 steht in einem axialen Abstand dem Innenrohr 3 gegenüber.

In den ringförmigen Zwischenraum zwischen dem inneren Rohrabschnitt 12 und dem äußeren Rohrabschnitt 13 des Eintrittskopfes 11 ist eine Wärmeisolierung eingebracht. Die Wärmeisolierung besteht aus mehreren Schichten eines wärmeisolierenden Materials, die in axialer Richtung hintereinander liegen. Im dargestellten Fall sind drei Schichten angeordnet, und zwar eine erste Schicht 14, eine zweite Schicht 15 und eine dritte Schicht 16. Die Schichten 14, 15, 16 unterscheiden sich in ihrer Wärmeleitfähigkeit. Dabei sind die Schichten 14, 15, 16 so in dem Zwischenraum eingebracht, dass die dem Innenrohr 3 zugewandte erste Schicht 14 den geringsten Wärmeleitkoeffizienten hat und die dem Spaltrohr 1 zugewandte dritte Schicht 16 den höchsten Wärmeleitkoeffizienten aufweist. Die dazwischen liegende Schicht 15 hat einen mittleren Wärmeleitkoeffizienten. Die Isolierwirkung der Schichten 14, 15, 16 nimmt daher in Richtung auf das Innenrohr 3 zu bzw. in Richtung auf das Spaltrohr 1 ab. Die unterschiedlichen Wärmeleitkoeffizienten lassen sich durch die Auswahl der Werkstoffe oder die Dichte oder die Dicke der Schichten 14, 15, 16 variieren. Die Höhe der einzelnen Schichten 14, 15, 16 in axialer Richtung kann unterschiedlich sein und bestimmt sich nach der gewünschten Änderung der Isolierwirkung.

Die Unterschiede in den Wärmeleitkoeffizienten liegen zwischen 10 W/m*K auf der dem Spaltrohr 1 zugewandten Seite und 0,2 bis 0,6 W/m*K auf der dem Innenrohr 3 zugewandten Seite. Die Wärmeisolierung kann aus einem mineralischen oder einem faserigen Werkstoff bestehen und in den Zwischenraum als gegossene und aushärtbare Masse oder als Formstück eingebracht werden.

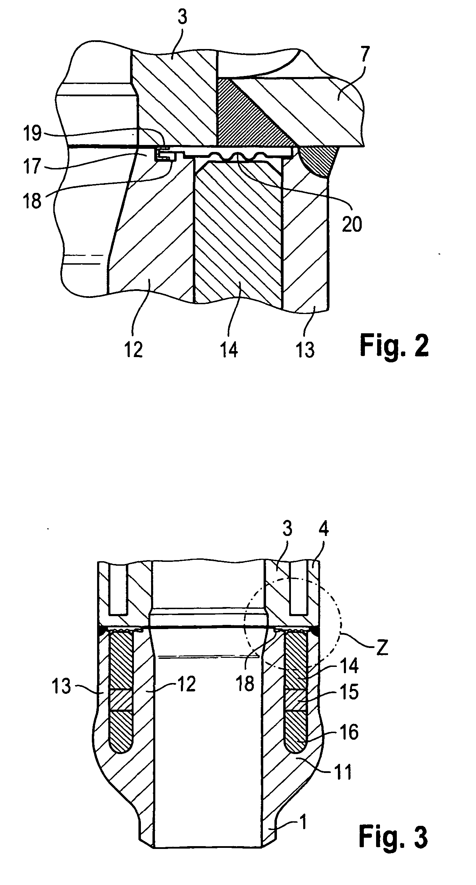

Der Innendurchmesser des inneren Rohrabschnittes 12 ist gleich dem Innendurchmesser des Innenrohres 3. Wie in Fig. 2 zu erkennen ist, weist die Stirnseite des inneren Rohrabschnittes 12 ausgehend vom Innendurchmesser einen vorstehenden Randbereich 17 auf. Radial außen von dem Randbereich 17 ist die Stirnfläche des inneren Rohrabschnittes 12 mit einer ringförmigen Ausnehmung 18 versehen. In die Ausnehmung 18 ist ein als U-Ring 19 ausgebildeter Dichtring eingelegt. Die Schenkel des U-Ringes 19 liegen an dem Grund der Ausnehmung 18 und an der Stirnseite des Innenrohres 3 an. Der U-Ring 19 dient als erste Dichtung, die bei niedrigeren Temperaturen das Entweichen von Spaltgas in Richtung auf den Zwischenraum innerhalb des Eintrittskopfes 11 und des dort eingebrachten wärmeisolierenden Materials verhindert.

Der axiale Abstand des innenliegenden Randbereiches 17 des inneren Rohrabschnittes 12 von der Stirnseite des Innenrohres 3 ist kleiner gewählt als die maximal im Betrieb aufgrund der Abmessung des Eintrittskopfes 11 auftretende thermisch bedingte Längendehnung des Eintrittskopfes 11. Bei Erreichen einer vorbestimmten Temperatur wird mit fortschreitender Längendehnung der Abstand zwischen Eintrittskopf 11 und Innenrohr 3 überbrückt sein, so dass ein Metall-zu-Metall-Kontakt zwischen dem vorstehenden Randbereich 17 des inneren Rohrabschnittes 12 und dem Innenrohr 3 entsteht. Dieser Metall-zu-Metall-Kontakt wirkt als zweite Dichtung und verhindert bei höheren Temperaturen ein Eindringen von Spaltgas in Richtung auf den U-Ring 19 und den Zwischenraum innerhalb des Eintrittskopfes 11 oder schränkt ein solches Eindringen zumindest weitgehend ein.

Der das wärmeisolierende Material aufnehmende Zwischenraum innerhalb des Eintrittskopfes 11 ist durch eine ringförmige, elastische und gasundurchlässige Membran 20 verschlossen. Die Membran 20 ist auf dem inneren und dem äußeren Rohrabschnitt 12, 13 dicht befestigt. Die Membran 20 ist vorzugsweise gewellt. Sie dient als dritte Dichtung und verhindert, dass eventuell noch durch den U-Ring 19 gedrungenes Spaltgas das wärmeisolierende Material erreicht.

Anstelle der oben beschriebenen Wasserkammer 5 kann der Eintrittskopf 11 auch an einen anders gestalteten Sammler zur Zuführung des Kühlmittels zu dem gekühlten Rohr geschweißt werden.

Der Eintrittskopf 11 kann auch - wie in Fig. 3 gezeigt ist - direkt mit dem gekühlten, aus Innenrohr 3 und Mantelrohr 4 bestehenden Rohr verbunden sein, indem der äußere Rohrabschnitt 13 des Eintrittskopfes 11 außen mit dem gekühlten Rohr verschweißt ist. Der innere Rohrabschnitt 12 des Eintrittskopfes 11 ist - wie oben beschrieben - ausgebildet und steht dem geschlossenen Ende des gekühlten Rohres gegenüber, wobei ein U-Ring 19 als Dichtring in der Ausnehmung 18 der Stirnseite des inneren Rohrabschnittes 12 radial außen vor dem vorstehenden Randbereich 17 vorgesehen und der Zwischenraum zwischen dem inneren und dem äußeren Rohrabschnitt 12, 13 des Eintrittskopfes 11 durch die gasundurchlässige Membran 20 verschlossen ist.

## Patentansprüche

1. Wärmetauscher zum Kühlen von Spaltgas mit einer Rohrverbindung zwischen einem gekühlten Rohr und einem ungekühlten Rohr, wobei das gekühlte Rohr aus einem gekühlten Innenrohr (3) und einem Mantelrohr (4) besteht, wobei das Innenrohr (3) von dem Mantelrohr (4) umgeben ist und wobei das gekühlte Rohr mit dem ungekühlten, heißen Rohr über einen mit dem ungekühlten Rohr verbundenen, im Querschnitt gabelförmigen Eintrittskopf (11) in Verbindung steht, der einen äußeren Rohrabschnitt (13) und einen inneren Rohrabschnitt (12) aufweist, zwischen denen sich ein mit einem wärmeisolierenden Material gefüllter Zwischenraum befindet, wobei der äußere Rohrabschnitt (13) mit dem Mantelrohr (4) verbunden ist und der innere Rohrabschnitt (12) dem Innenrohr (3) in einem geringen axialen Abstand gegenüber steht und zwischen den Stirnflächen des Innenrohres (3) und dem inneren Rohrabschnitt (12) eine Dichtung angeordnet ist, **dadurch gekennzeichnet, dass** die Dichtung als U-Ring (19) ausgebildet und in einer Ausnehmung (18) in der Stirnseite des inneren Rohrabschnittes (12) des Eintrittskopfes (11) angeordnet ist, dass die Ausnehmung (18) radial außen vor einem vorstehenden, dem Innenrohr (3) in einem geringen axialen Abstand gegenüberstehenden Randbereich (17) des inneren Rohrabschnittes (12) ausgebildet ist und dass der geringe axiale Abstand zwischen dem Randbereich (17) des inneren Rohrabschnittes (12) des Eintrittskopfes (11) und dem Innenrohr (3) gleich oder kleiner ist als die maximale Wärmedehnung des Eintrittskopfes (11).

2. Wärmetauscher nach Anspruch 1, **dadurch gekennzeichnet, dass** oberhalb des das wärmeisolierende Material aufnehmenden Zwischenraumes des Eintrittskopfes (11) eine gasundurchlässige flexible Membran (20) angeordnet ist, die dicht mit dem inneren und dem äußeren Rohrabschnitt (12, 13) des Eintrittskopfes (11) verschweißt ist.

3. Wärmetauscher nach Anspruch 2, **dadurch gekennzeichnet, dass** die gasundurchlässige Membran (20) gewellt ist.

4. Wärmetauscher nach Anspruch 1, **dadurch gekennzeichnet, dass** der äußere Rohrabschnitt (13) des Eintrittskopfes (11) und das Mantelrohr (4) an jeweils einander gegenüberliegenden Seiten mit einer Wasserkammer (5) verbunden sind, wobei die Wasserkammer (5) aus einem massiven streifenförmigen Stück besteht, in das kreisförmige Vertiefungen (6) eingebracht sind, die jeweils ein einziges Innenrohr (3) umgeben, das in einen dünnen Boden (7) der Vertiefung (6) eingeschweißt ist, und wobei der Durchmesser der Vertiefung (6) dem Innendurchmesser des Mantelrohres (4) entspricht.

5. Wärmetauscher nach Anspruch 4, **dadurch gekennzeichnet, dass** der äußere Rohrabschnitt (13) des Eintrittskopfes (11) direkt mit dem Mantelrohr (4) verbunden ist.

6. Wärmetauscher nach Anspruch 1, **dadurch gekennzeichnet, dass** das wärmeisolierende Material aus mehreren in axialer Richtung hintereinander liegenden Schichten (14, 15, 16) aufgebaut ist, deren Wärmeleitkoeffizienten mit der Entfernung von dem Innenrohr (3) ansteigen.

## Claims

1. A heat exchanger for cooling cracked gas with a tube connection between a cooled tube and an uncooled tube, wherein the cooled tube consists of a cooled inner tube (3) and a jacket tube (4), wherein the inner tube (3) is surrounded by the jacket tube (4) and wherein the cooled tube is in connection with the uncooled, hot tube via an inlet head (11) which is fork-like in cross section and connected to the uncooled tube, which comprises an outer tube section (13) and an inner tube section (12), between which an intermediate space filled with a heat-insulating material is located, wherein the outer tube section (13) is connected to the jacket tube (4) and the inner tube section (12) is opposite the inner tube (3) in a small axial distance and between the end faces of the inner tubes (3) and the inner tube section (12) a seal is arranged, **characterized in that** the seal is formed as a U-ring (19) and arranged in a recess (18) in the face end of the inner tube section (12) of the inlet head (11), that the recess (18) is formed radially outside in front of a projecting marginal region (17) of the inner tube section (12) which is opposite the inner tube (3) in a small axial distance and that the small axial distance between the marginal region (17) of the inner tube section (12) of the inlet head (11) and the inner tube (3) is equal or smaller than the maximum heat expansion of the inlet head (11).

2. The heat exchanger according to Claim 1, **characterized in that** above the intermediate space of the inlet head (11) receiving the heat-insulating material a gas-impermeable flexible membrane (20) is arranged, which is tightly welded to the inner and the outer tube section (12, 13) of the inlet head (11).

3. The heat exchanger according to Claim 2, **characterized in that** the gas-impermeable membrane (20) is corrugated.

4. The heat exchanger according to Claim 1, **characterized in that** the outer tube portion (13) of the inlet head (11) and the jacket tube (4) are each connected to a water chamber (5) on sides located opposite to one another, wherein the water chamber (5) consists of a solid strip-shaped piece, into which circular depressions (6) are arranged, each of which surrounds a single inner tube (3), which is welded into a thin bottom (7) of the depression (6), and wherein the diameter of the depression (6) corresponds to the inner diameter of the jacket tube (4).

5. The heat exchanger according to Claim 4, **characterized in that** the outer tube section (13) of the inlet head (11) is directly connected to the jacket tube (4).

6. The heat exchanger according to Claim 1, **characterized in that** the heat-insulating material is constructed of several layers (14, 15, 16) located one after the other in axial direction, the heat conduction coefficients of which increase with the distance from the inner tube (3).

## Revendications

1. Echangeur thermique pour refroidir du gaz de claquage avec un raccord tubulaire entre un tuyau refroidi et un tuyau non refroidi, dans lequel le tuyau refroidi est constitué d'un tuyau intérieur refroidi (3) et d'un tuyau d'enveloppe (4), dans lequel le tuyau intérieur (3) est entouré par le tuyau d'enveloppe (4) et dans lequel le tuyau refroidi est en liaison avec le tuyau chaud, non refroidi par l'intermédiaire d'une tête d'entrée (11) à section transversale en forme de fourche, reliée au tuyau non refroidi, qui présente une portion tubulaire extérieure (13) et une portion tubulaire intérieure (12), entre lesquelles se trouve un espace intermédiaire rempli par un matériau thermiquement isolant, dans lequel la portion tubulaire extérieure (13) est reliée au tuyau d'enveloppe (4) et la portion tubulaire intérieure (12) est en espacement axiale minime par rapport au tuyau intérieur (3) et entre les surfaces d'étanchéité du tuyau intérieur (3) et de la portion tubulaire intérieure (12) un joint d'étanchéité est disposé, **caractérisé en ce que** le joint d'étanchéité est conçu comme un joint en U (19) et est disposé dans un évidement (18) dans le côté avant de la portion tubulaire intérieure (12) de la tête d'entrée (11), **en ce que** l'évidement (18) est réalisé radialement à l'extérieur devant une zone de bord (17) opposée au tuyau intérieur (3) dans un espacement axial minime, faisant saillie, de la portion tubulaire intérieure (12) et **en ce que** l'espacement axial minime entre la zone de bord (17) de la portion tubulaire intérieure (12) de la tête d'entrée (11) et le tuyau intérieur (3) est égal ou inférieur à la dilatation thermique maximale de la tête d'entrée (11).

2. Echangeur thermique selon la revendication 1, **caractérisé en ce que** au-dessus de l'espace intermédiaire renfermant le matériau thermiquement isolant de la tête d'entrée (11), une membrane flexible imperméable au gaz (20) est disposée, qui est soudée de manière étanche à la portion tubulaire (12, 13) intérieure et extérieure de la tête d'entrée (11).

3. Echangeur thermique selon la revendication 2, **caractérisé en ce que** la membrane imperméable au gaz (20) est ondulée.

4. Echangeur thermique selon la revendication 1, **caractérisé en ce que** la portion tubulaire extérieure (13) de la tête d'entrée (11) et le tube d'enveloppe (4) sont reliés à une chambre d'eau (5) sur des côtés respectivement en vis-à-vis, dans lequel la chambre d'eau (5) est constituée d'une pièce massive en forme de bande, dans laquelle des cavités cruciformes (6) sont ménagées, qui entourent respectivement un tuyau intérieur unique (3), qui est soudé dans une fond mince (7) de la cavité (6), et dans lequel le diamètre de la cavité (6) correspond au diamètre intérieur du tuyau d'enveloppe (4).

5. Echangeur thermique selon la revendication 4, **caractérisé en ce que** la portion tubulaire extérieure (13) de la tête d'entrée (11) est reliée directement au tuyau d'enveloppe (4).

6. Echangeur thermique selon la revendication 1, **caractérisé en ce que** le matériau thermiquement isolant est constitué de plusieurs couches (14, 15, 16) situées les unes derrière les autres dans la direction axiale, dont les coefficients de conductivité thermique augmentent proportionnellement à l'éloignement du tuyau intérieur (3).
